# EUROPEAN PATENT APPLICATION

(11) **EP 1 553 150 A1**
(43) Date of publication of application: **13.07.2005**
(21) Application number: 03751490.8
(22) Date of filing: 14.10.2003
(51) Int. Cl.: C09K 3/10, E04B 1/682

(54) **SEALING MATERIAL USED FOR TRANSPARENT MATERIAL HAVING PHOTOCATALYST LAYER**

(30) Priority: 17.10.2002 JP 2002302825; 02.10.2003 JP 2003344180
(71) Applicant: Kaneka Corporation, Osaka 530-8288 (JP)
(72) Inventor: IWAKIRI, Hiroshi, Kobe-shi, Hyogo 651-2277 (JP); KOMITSU, Shintaro, Takasago-shi, Hyogo 676-0074 (JP)
(74) Representative: Hart Davis, Jason
(86) International application number: PCT/JP2003/013147
(87) International publication number: WO 2004/035707

(57) **Abstract**

A sealant including a reactive silicon group-containing acryl or saturated hydrocarbon based polymer, which causes no staining of a transparent material to be sealed and suppresses deterioration of the sealant when the sealant is applied to the material, such as glass subjected to an anti-staining treatment based on a photocatalytic layer.

## Description

### Technical Field

The present invention relates to sealants (both solid sealants beforehand molded as sealants in predetermined shapes and liquid sealants are included) to be used for low-staining transparent materials.

### Background Art

Room temperature curable polymers are liquid before curing and become rubber-like substances after curing, and are used as sealants. As representative room temperature sealants, urethane, silicone, modified silicone and polysulfide sealants and the like have been known. Sealants are used for various materials including building materials such as glass, metals, and stone; when a sealant is used for transparent materials such as glass, light passes through the glass and reaches the interface between the glass and the sealant, and hence, if the weather resistance of the sealant is low, the sealant is deteriorated to cause peeling in the interface between the glass and the sealant. Accordingly, as sealants for transparent materials such as glass, silicone sealants excellent in weather resistance have been used. However, there is a problem such that silicone sealants undergo bleeding of silicon compounds such as silicone oil from the inside of the sealants, and stain the materials to be sealed.

For the purpose of solving the above problem due to silicone sealants, there have been disclosed methods in which, in place of silicone sealants, nonsilicone sealants such as modified silicone sealants and reactive silicon group-containing polyisobutylene sealants are used (Patent Document 1). Patent document 1 describes that reactive silicon group-containing polyisobutylene sealants can be used as sealants for transparent materials such as glass materials.

In these years, methods have been developed in which a photocatalytic layer is arranged on the surface of materials such as building materials to provide the surface with anti-staining function. It is said that if silicone sealants are used as sealants for such building materials, not only staining due to silicone sealants cannot be prevented, but also the anti-staining function itself is degraded.

On the contrary, when nonsilicone organic polymer sealants are used for transparent materials such as glass with a photocatalytic layer arranged thereon, such sealants are, in a contrast to the silicone sealants, lower in stability than the silicone sealants because such sealants are typical organic materials, and tend to be deteriorated by the light passing through the transparent materials to be incident on such sealants. Moreover, when such sealants are used for photocatalytic materials, additionally there is caused deterioration of such sealants ascribable to oxidative substances generated by the photocatalytic action. Thus, the surface, with a photocatalytic material provided thereon, of transparent materials such as glass offers circumstances extremely harsh with regard to deterioration of sealants.

In Patent Document 2, there is disclosed an application of a modified silicone sealant and a polyisobutylene sealant as sealants for building materials having a photocatalytic layer on the surface thereof, and there is also disclosed a glass as a building material; however, in the examples, the sealants are used only for nontransparent materials such as aluminum building materials. In Patent Document 3, it is disclosed that when a silicone sealant is made to contact with the photocatalytic layer of a panel material having a photocatalytic layer, the photocatalytic action directly act on the silicone sealant to deteriorate the silicone sealant. In Non-Patent Document 1, it is described that silicone sealants are superior in weather resistance to nonsilicone organic polymer sealants such as modified silicone sealants, and in particular, silicone sealants are suitable as sealants for transparent materials. Accordingly, those skilled in the art are expected to understand that glass provided with a photocatalytic layer offers circumstances harsh with regard to deterioration of organic materials, and consequently modified silicone sealants and polyisobutylene sealants can hardly be used for such glass. When a sealant is used for glass, it is expected that a processing is carried out in which light, in particular, ultraviolet light is intercepted so that transmitted light, in particular, ultraviolet light may not directly reach the adhesion surface between the glass and the sealant. Such a processing has been actually applied to the sealing of windshields of vehicles; accordingly, those skilled in the art are expected to plan to adopt such a processing when glass is intended to use in view of Patent Document 2.
[Patent Document 1] Japanese Patent Laid-Open No. 10-205013
[Patent Document 2] Japanese Patent Laid-Open No. 2002-167871
[Patent Document 3] Japanese Patent Laid-Open No. 8-302856
[Non-Patent Document 1] "Kenchikuyou Shihringuzai (Sealants for Building)" (First Edition, Second Printing, 1997, published by Nippon Shihringuzai Kougyoukai (Japan Sealant Industry Association).

### Disclosure of the Invention

A problem to be solved by the present invention is to provide a sealant for a transparent material with a photocatalytic layer arranged on the surface thereof having anti-staining action, the sealant being hardly deteriorated by light.

The above described problem can be solved by the following aspects of the invention.
(1) A sealant used in combination with a transparent material having an anti-staining layer on the surface thereof, in which the sealant includes a reactive silicon group-containing acryl or saturated hydrocarbon polymer.
(2) The sealant described in (1), in which the anti-staining layer is a layer having the anti-staining action of a photocatalyst.
(3) The sealant described in any one of (1) and (2), in which the transparent material is glass.
(4) The sealant described in any one of (1) to (3), in which the transparent material is a building material.
(5) The sealant described in any one of (1) to (4), in which the sealant includes an acryl-based plasticizer as a component.
(6) The sealant described in any one of (1) to (5), in which the sealant includes a -COOCH₃ group-containing compound as a component.
(7) The sealant described in any one of (1) to (6), in which the reactive silicon group-containing acryl or saturated hydrocarbon based polymer includes a monomer unit deriving from a -COOCH₃ group-containing monomer.
(8) A sealing method for sealing a transparent material having a layer comprising an anti-staining photocatalyst on the surface thereof, wherein a sealant including a reactive silicon group-containing acryl or saturated hydrocarbon based polymer is used.
(9) The sealing method described in (8), in which the transparent material is glass.
(10) The sealing method described in any one of (8) and (9), in which the transparent material is a building material.
(11) The sealing method described in any one of (8) to (10), in which the layer having anti-staining photocatalysis on the surface thereof is a layer including a photocatalytic material as well as a hydrophilic material.
(12) The sealing method described in any one of (8) to (11), in which the sealant includes an acryl-based plasticizer as a component.
(13) The sealing method described in any one of (8) to (12), in which the sealant includes a -COOCH₃ group-containing compound as a component.
(14) The sealing method described in any one of (8) to (13), in which the reactive silicon group-containing acryl or saturated hydrocarbon based polymer is a polymer including a monomer unit deriving from a -COOCH₃ group-containing monomer.
(15) The sealing method described in any one of (8) to (14), in which a silicone based primer is applied onto a portion to be sealed of the transparent material.
(16) A sealed transparent material, obtained according to any one of the methods (8) to (15).

The sealant of the present invention is a sealant which uses a sealant including an acryl or saturated hydrocarbon based polymer which does not undergo bleeding of silicon oil. When such a sealant is used for a transparent material, such as glass, having a photocatalytic layer or a hydrophilic layer, no deterioration of the sealant due to light is found, and the beauty appearance of the transparent material can also be maintained over a long period of time.

The sealant of the present invention does not cause staining of a transparent material, such as glass, subjected to anti-staining treatment, and has an effect such that the sealant is hardly peeled at the interface in contact with the transparent material. Additionally, also when the sealant of the present invention is used for a transparent material provided with anti-staining action, the sealant displays an excellent weather resistant adhesiveness.

### Best Mode for Carrying Out the Invention

The reactive silicon groups of the polymers used in the present invention each are a group having hydroxy or hydrolyzable groups each bonded to a silicon atom and being capable of cross-linking by forming siloxane bonds through a reaction catalyzed by a curing catalyst. Representative examples of such groups include the groups represented by the following formula: 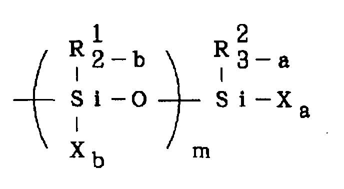 where R¹ and R² each are an alkyl group having 1 to 20 carbon atoms, an aryl group having 6 to 20 carbon atoms, an aralkyl group having 7 to 20 carbon atoms, or a triorganosiloxy group represented by R'₃SiO- (R' is a monovalent hydrocarbon group having 1 to 20 carbon atoms, and three R's may be the same or different), and when two or more of R¹ or R² groups are present, such groups may be the same or different; X represents a hydroxy group or a hydrolyzable group, and when two or more Xs are present, the Xs may be the same or different; a represents 0, 1, 2, or 3, and b represents 0, 1 or 2; b's in the m sets of the group represented by 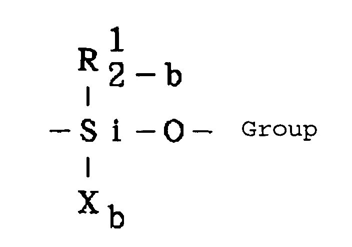 are not needed to be equal; m represents an integer of 0 to 19; however, it is to be satisfied that a + (sum of b's) ≥ 1.

No particular constraint is imposed on the above described hydrolyzable groups represented by X, and such hydrolyzable groups have only to be hydrolyzable groups well known in the art; specific examples include a hydrogen atom, a halogen atom, an alkoxy group, an acyloxy group, a ketoxymate group, an amino group, an amido group, an acid amino group, an aminooxy group, a mercapto group and an alkenyloxy group. Among these groups, preferable are a hydrogen atom, an alkoxy group, an acyloxy group, a ketoxymate group, an amino group, an amido group, an aminooxy group, a mercapto group and an alkenyloxy group; an alkoxy group is particularly preferable from the viewpoint that an alkoxy group is moderately hydrolyzable and easily handlable.

To a silicon atom, 1 to 3 hydrolyzable groups and 1 to 3 hydroxy groups can be bonded, and a + (sum of b's) falls preferably in the range from 1 to 5. When 2 or more hydrolyzable groups and 2 or more hydroxy groups are bonded in a reactive silicon group, the hydrolyzable groups may be the same or different and this is also the case for the hydroxy groups.

The number of the silicon atoms forming the above described reactive silicon group may be one or more, and may be of the order of 20 in the case of the silicon atoms connected by siloxane bonds and the like. In particular, a reactive silicon group represented by the following formula is preferable because it is easily available: 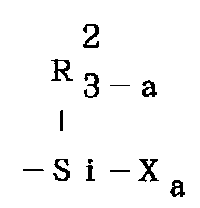 where R² and X are the same as described above, and a is an integer of 1, 2 or 3.

Additionally, specific examples of R¹ and R² in the above Formulas (1), (2) and (3) include alkyl groups such as a methyl group and an ethyl group; cycloalkyl groups such as a cyclohexyl group; aryl groups such as a phenyl group; aralkyl groups such as a benzyl group; and a triorqanosiloxy group represented by R'₃SiO- in which R' is a methyl group, a phenyl group or the like. Among these groups, a methyl group is particularly preferable.

More specific examples of the reactive silicon group include a trimethoxysilyl group, a triethoxysilyl group, a triisopropoxysilyl group, a dimethoxymethylsilyl group, a diethoxymethylsilyl group, and a diisopropoxymethylsilyl group.

The larger is the number of hydrolyzable groups bonded to silicon atoms, in particular, to one silicon atom, the higher the reactivity of the reactive silicon group tends to be, and the lager the curing rate of the composition of the present invention tends to be; however, sometimes the elongation at break of the cured substance tends to be decreased. For example, a trimethoxysilyl group is higher in reactivity than a dimethoxymethylsilyl group, a trimethoxysilyl group-containing polymer is higher in reactivity and larger in curing rate than a dimethoxymethylsilyl group-containing polymer, but the cured substance of the former polymer tends to be smaller in elongation at break than the cured substance of the latter polymer. By using a trimethoxysilyl group-containing polymer or by simultaneously using a trimethoxysilyl group-containing polymer and a dimethoxymethylsilyl group-containing polymer, a curable composition large in curing rate can be obtained. Additionally, also by introducing both groups into one polymer, a curable composition large in curing rate can be obtained. The used amount of a highly reactive polymer such as a trimethoxysilyl group-containing polymer and the ratio between both groups in one polymer can be appropriately determined so that a desired elongation at break and a desired curing rate of the cured substance may be obtained.

It is preferable that the number of the reactive silicon groups contained in one molecule is at least one, and preferably 1.1 to 5. When the number of the reactive silicon groups contained in one molecule is less than 1, the curability becomes insufficient, and hence a satisfactory rubber elasticity behavior can hardly be exhibited.

The reactive silicon groups may be located at the terminals or in the interior of the polymer molecule chain, or both at the terminals and in the interior. In particular, preferable is the case in which the reactive silicon groups are located at the terminals of the molecule chain, because in that case, the effective network content in the saturated hydrocarbon based polymer component contained in the finally formed cured substance becomes large, and hence it becomes easier to obtain a rubber-like cured substance having a high strength and a high elongation. Additionally, these reactive silicon group-containing polymers may be used either each alone or in combinations two or more thereof.

The introduction of the reactive silicon group can be carried out by methods well known in the art. More specifically, examples of such methods include the following.

An organic polymer having in the molecule functional groups such as unsaturated groups, hydroxy groups, epoxy groups and isocyanate groups is reacted with a compound having functional groups such as a hydrosilyl group, an isocyanate group, a hydroxy group and an amino group exhibiting reactivity to the former functional groups and having a reactive silicon group. Among the above methods, preferable is a method in which a reactive silicon group-containing compound is reacted with an organic polymer at the terminals of the organic polymer.

No particular constraint is imposed on the acryl based monomers constituting the main chains of the acryl based polymers of the present invention, but various types can be used. Examples of the monomers concerned include (meth)acrylic acid based monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, isononyl (meth)acrylate, decyl (meth)acrylate, isodecyl (meth)acrylate , isoundecyl (meth)acrylate, dodecyl (meth)acrylate, myristyl (meth)acrylate, palmityl (meth)acrylate, stearyl (meth)acrylate, eicosyl (meth)acrylate, phenyl (meth)acrylate, tolyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, glycidyl (meth)acrylate, 2-aminoethyl (meth)acrylate, γ-(methacryloyloxypropyl)trimethoxysilane, ethylene oxide adduct of (meth)acrylate, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, 2-perfluoroethyl (meth)acrylate, perfluoromethyl (meth)acrylate, diperfluoromethylmethyl (meth)acrylate, 2-perfluoromethyl-2-perfluoroethylmethyl (meth)acrylate, 2-perfluorohexylethyl (meth)acrylate, 2-perfluorodecylethyl (meth)acrylate and 2-perfluorohexadecylethyl (meth)acrylate.

By use of a polymer using a -COOCH₃ group-containing monomer such as methyl (meth)acrylate, among the above monomers, and in particular, by use of a copolymer thereof simultaneously using other acryl based monomers such as n-butyl (meth)acrylate, the weather resistant adhesiveness of a sealant can be improved.

By copolymerizing a -COOCH₃ group-containing monomer, there can be improved an initial adhesiveness to a transparent substrate provided with a layer having an anti-staining action due to a photocatalytic glass, and there can also be improved the long term weather resistant adhesiveness. Additionally, by use of the -COOCH₃ group-containing monomer, the curing retardation (skin formation time retardation) of a sealant during the storage can be suppressed. No particular constraint is imposed on the-COOCH₃ group-containing monomer; however, in addition to the above described monomers, monomethyl maleate, dimethyl maleate, monomethyl fumarate, dimethyl fumarate, monomethyl itaconate and dimethyl itaconate are preferable; from the viewpoint of polymerization control and high suppression effect of curing retardation, methyl methacrylate and methyl acrylate are preferable, and methyl acrylate is particularly preferable.

Additionally, with the increase of the copolymerization amount of the -COOCH₃ group-containing monomer, the viscosity is increased and the workability of the sealant is lowered, and hence it is preferable that the copolymerization amount is such that the balance between the above described effect and the viscosity is appropriate.
The copolymerization amount is 1 to 50 mol%, preferably 2 to 30 mol%, and particularly preferably 5 to 25%.

Additionally, the sealant of the present invention can be blended with a -COOCH₃ group-containing compound. By blending such a compound, when the sealant causes a curing retardation, the curing retardation can be suppressed. No particular constraint is imposed on the -COOCH₃ group-containing compound to be used in the present invention; both nonpolymers and polymers can be used.

No particular constraint is imposed on the structure of the -COOCH₃ group-containing compound; however, a compound in which the α-position carbon atom of the -COOCH₃ group is primary or secondary is preferable because such a compound has a large suppression effect of curing retardation. Specific examples of such a compound include the following compounds.

There are listed dimethyl malonate, dimethyl succinate, dimethyl glutarate, dimethyl adipate, dimethyl sebacate, methyl acetete, dimethyl propionate, methyl butyrate, methyl valerate, methyl caprylate, methyl laurate, methyl myristate, methyl palmitate, methyl stearate, methyl oleate, methyl linoleate, and palm fatty acid methyl ester. These compounds can be used either each alone or in combinations thereof.

When the -COOCH₃ group-containing compound is a polymer, it is preferable that a -COOCH₃ group-containing monomer is contained as a copolymerization component although no particular constraint is imposed on the monomer; particularly, methyl acrylate is preferable.

In the case of a copolymer containing as a component a -COOCH₃ group-containing monomer, no particular constraint is imposed on monomers other than the -COOCH₃ group-containing monomer. Additionally, when a monomer other than the -COOCH₃ group is a (meth)acrylate, no particular constraint is imposed on the alkoxy group of the ester group; however, it is preferable that the ratio of the ester groups being primary and having 5 or more carbon atoms to the -COOCH₃ group is 80% or less in molar ratio.

When the -COOCH₃ group-containing compound is a copolymer containing as a component a methyl ester group-containing monomer, no particular constraint is imposed on the ester groups possessed by the monomers other than the-COOCH₃ group-containing monomer, in particular, the alkoxy groups of the ester groups; however, it is preferable that the ratio of the ester groups being primary and having 2 to 4 carbon atoms to the methyl ester group is 400% or less in molar ratio.

The addition amount of the -COOCH₃ group-containing compound in the present invention is not limited, but is preferably somewhat larger for the purpose of displaying the effect of suppressing the aforementioned curability lowering due to storage. However, when the addition amount is too large, the balance between the viscosity of a blended composition and the physical properties of the cured substance derived from the blended composition is sometimes lost, and hence it is preferable to add an appropriate amount in conformity with the purpose.

When the -COOCH₃ group-containing compound is a polymer, the synthesis method thereof is not limited, and various polymerization methods well known in the art are used. When the -COOCH₃ group-containing monomer is a radical polymerizable monomer, there may be used various controlled radical polymerization methods such as a common free radical polymerization method, a free radical polymerization method using a chain transfer agent, a continuous polymerization method under a high temperature and a high pressure (described in National Publication of International Patent Application No. 1982-502171, Japanese Patent Laid-Open Nos. 59-6207 and 60-215007, National Publication of International Patent Application No. 1998-511992 and the like), and an atom transfer radical polymerization method described in the section for the synthesis method of the component (I) polymer of the present patent.

In addition to the above described acryl based monomers, other monomers may be simultaneously used. Examples of the other monomers include styrene based monomers such as styrene, vinyltoluene, α-methylstyrene, chlorostyrene, and styrenesulfonic acid and the salts thereof; fluorine-containing vinyl monomers such as perfluoroethylene, perfluoropropylene and fluorinated vinylidene; silicon-containing vinyl based monomers such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide based monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide; nitrile group-containing vinyl based monomers such as acrylonitrile and methacrylonitrile; amide group-containing vinyl based monomers such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride, vinylidene chloride, allyl chloride and allylalcohol. These monomers may be used either each alone or two or more of these monomers may be copolymerized.

In the present invention, copolymerization, and moreover, block copolymerization may be applied; in such polymerizations, it is preferable that the acryl based monomers are included in a content of 40% or more in ratio by weight. As an acryl based polymer, an acrylate based polymer is preferable. It is to be noted that an acryl based polymer means a polymer of acrylic acid and/or methacrylic acid, or the derivatives thereof, and acrylic acid and/or metahcrylic acid are also referred to as (meth)acrylic acid, the derivatives thereof being also described in a similar manner as the case may be.

The molecular weight distribution of an acryl based polymer of the present invention, namely, the ratio (Mw/Mn) between the weight average molecular weight (Mw) and the number average molecular weight (Mn), as measured by gel permeation chromatography (GPC), is not particularly limited, but is preferably less than 1.8, more preferably 1.7 or less, further preferably 1.6 or less, yet further preferably 1.5 or less, particularly preferably 1.4 or less, and most preferably 1.3 or less. In the GPC measurement of the present invention, chloroform is usually used as mobile phase, measurement is made with a polystyrene gel column, and the number average molecular weight and the like can be obtained as relative to polystyrene standard.

The number average molecular weight of an acryl based polymer of the present invention is not particularly limited, but is preferably 3000 or more, more preferably 5000 or more, and further preferably 10000 or more when measured with gel permeation chromatography. When the molecular weight is small, sometimes a high elongation of the cured substance is hardly displayed. Additionally, the number average molecular weight is preferably 1000000 or less, more preferably 100000 or less, and further preferably 50000 or less.

The polymerization method of an acryl based polymer of the present invention is not limited, and common radical polymerization methods using peroxide based and azo based initiators may be used; however, the controlled radical polymerization method described in Japanese Patent Laid-Open No. 2001-329065 is preferable, the living radical polymerization method is more preferable, and the atom transfer radical polymerization method is particularly preferable.

There can be used polymer mixtures in which an acryl based polymer of the present invention is added with oxyalkylene polymers such as reactive silicon group-containing oxypropylene polymers. In this case, the viscosity of the composition is decreased, and the elongation of the cured substance can be made larger and the modulus thereof can be decreased. Such polymer mixtures are described in Japanese Patent Laid-Open Nos. 2001-329025, 2001-329065 and 2002-294022, and an internationally published, international patent application WO01/90224, and the like.

A saturated hydrocarbon based polymer used in the present invention is related to a concept signifying a polymer substantially containing no carbon-carbon unsaturated bonds other than aromatic rings, and a polymer to form the skeleton of a reactive silicon group-containing saturated hydrocarbon based polymer used in the present invention can be obtained by the following methods.
(1) A method in which olefin based compounds having 1 to 6 carbon atoms such as ethylene, propylene, 1-butene and isobutylene are polymerized as main monomers.
(2) A method in which diene based compounds such as butadiene and isoprene are homopolymerized, or the above described olefin compounds and the diene compounds are copolymerized, and then hydrogenation is carried out.

Among these polymers, isobutylene based polymers and hydrogenated polybutadiene based polymers are preferable because functional groups can be easily introduced at the terminals of these polymers, the molecular weights of these polymers can be easily controlled, and the number of the terminal functional groups can be increased.

The isobutylene based polymers each may be formed of the isobutylene unit as the exclusive monomer unit, or may include monomer units copolymerizable with isobutylene in a content range of 50% or less (% by weight, the same for the following), more preferably 30% or less, and particularly preferably 10% or less in the isobutylene based polymer.

Examples of these monomer components include olefins having 4 to 12 carbon atoms, vinyl ethers, aromatic vinyl compounds, vinylsilanes and allylsilanes. Specific examples of such copolymer components include 1-butene, 2-butene, 2-methyl-1-butene, 3-methyl-1-butene, pentene, 4-methyl-1-pentene, hexene, vinylcyclohexane, methyl vinyl ether, ethyl vinyl ether, isobutyl vinyl ether, styrene, α-methylstyrene, dimethylstyrene, monochlorostyrene, dichlorostyrene, β-pinene, indene, vinyltrichlorosilane, vinylmethyldichlorosilane, vinyldimethylchlorosilane, vinyldimethylmethoxysilane, vinyltrimethylsilane, divinyldichlorosilane, divinyldimethoxysilane, divinyldimethylsilane, 1,3-divinyl-1,1,3,3-tetramethyldisiloxane, trivinylmethylsilane, tetravinylsilane, allyltrichlorosilane, allylmethyldichlorosilane, allyldimethylchlorosilane, allyldimethylmethoxysilane, allyltrimethylsilane, diallyldichlorosilane, diallyldimethoxysilane, diallyldimethylsilane, γ-methacryloyloxypropyltrimethoxysilane, γ-methacryloyloxypropylmethyldimethoxysilane.

When these vinylsilanes and allylsilanes are used as the monomers copolymerizable with isobutylene, the silicon contents of the polymers are increased, the number of the groups capable of acting as silane coupling agents is increased, and the adhesiveness of the obtained compositions is improved.

Additionally, when polymers and copolymers using-COOCH₃ group-containing monomers are used, the weather resistance of sealants is improved.

Moreover, also in hydrogenated polybutadiene based polymers and other saturated hydrocarbon based polymers, other monomer units may be included in addition to the monomer units to be the main components, similarly to the case of the isobutylene based polymers.

Additionally, the saturated hydrocarbon based polymers used in the present invention may include a small amount of monomer units to leave double bonds after polymerization such as polyene compounds including butadiene and isoprene in a content range of preferably 10% or less, further preferably 5% or less, and particularly preferably 1 % or less as long as an object of the present invention can be achieved.

The number average molecular weights of the saturated hydrocarbon based polymers, in particular, the isobutylene based polymers and hydrogenated polybutadiene based polymers are preferably of the order of 500 to 100,000 in terms of the molecular weights based on GPC relative to polyethylene standard; in particular, preferable are liquid or fluid polymers each having a number average molecular weight of the order of 1,000 to 30,000 from the viewpoint of ease of handling and the like. Moreover, as for the molecular weight distribution (Mw/Mn), the narrower Mw/Mn is the more preferable because the narrower Mw/Mn leads to the lower viscosity for the same molecular weight.

The manufacturing method of reactive silicon group-containing saturated hydrocarbon based polymers is described, in particular, by taking as examples the cases of reactive silicon group-containing isobutylene based polymers and reactive silicon group-containing hydrogenated polybutadiene based polymers. Among the above described reactive silicon group-containing isobutylene based polymers, the isobutylene based polymers having the reactive silicon groups at the molecular terminals thereof can be manufactured by use of terminal functional type, preferably total terminal functional type isobutylene based polymers obtained by a polymerization method referred to as the inifer method (a cation polymerization method in which both a particular compound, referred to as inifer, as an initiator and a chain transfer agent are used). Such manufacturing methods are described in Japanese Patent Laid-Open Nos. 63-6003, 63-6041, 63-254149, 64-22904 and 64-38407. It is preferable that a reactive silicon group-terminated isobutylene based polymer is manufactured by making an unsaturated group-terminated isobutylene based polymer undergo addition reaction, with the aid of a platinum based catalyst, with a hydrosilane compound formed by bonding a hydrogen atom to the group represented by Formula (1), preferably a hydrosilane compound formed by bonding a hydrogen atom to the group represented by Formula (3).

Additionally, an isobutylene based polymer having the reactive silicon groups within the molecule thereof is manufactured by adding reactive silicon group-containing vinylsilanes or reactive silicon group-containing allylsilanes into a monomer mainly composed of isobutylene to be copolymerized with the monomer.

Moreover, there can be manufactured an isobutylene based polymer having reactive silicon groups both at the terminals and in the interior of the molecular chain thereof in the following manner: in the polymerization for manufacturing an isobutylene based polymer having the reactive silicon groups at the molecular terminals thereof, reactive silicon group-containing vinylsilanes and reactive silicon group-containing allylsilanes are copolymerized in addition to the isobutylene monomer as the main component, and thereafter the reactive silicon groups are introduced into the terminals.

Specific examples of the reactive silicon group-containing vinylsilanes and the reactive silicon group-containing allylsilanes include vinyltrichlorosilane, vinylmethyldichlorosilane, vinyldimethylchlorosilane, vinyldimethylmethoxysilane, divinyldichlorosilane, divinyldimethoxysilane, allyltrichlorosilane, allylmethyldichlorosilane, allyldimethylchlorosilane, allyldimethylmethoxysilane, diallyldichlorosilane, diallyldimethoxysilane, γ-methacryloyloxypropyltrimethoxysilane, and γ-methacryloyloxypropylmethyldimethoxysilane.

The manufacturing method of the hydrogenated polybutadiene based polymers is a method in which, for example, at the beginning, the hydroxy group of a hydroxy-terminated hydrogenated polybutadiene based polymer is converted into an oxymetal group such as -ONa and -OK, and thereafter an organic halogen compound represented by a general formula, CH₂=CH-R³-Y, is reacted with the oxymetal group-terminated hydrogenated polybutadiene based polymer, and thus an olefin group-terminated hydrogenated polybutadiene based polymer (hereinafter, also referred to as an olefin-terminated hydrogenated polybutadiene based polymer) can be manufactured; in the general formula, CH₂=C_{H}-R³-Y, Y represents a halogen atom such as a chlorine atom and an iodine atom, and R³ represents a divalent organic group represented by -R⁴-, -R⁴-OC(=O)-, and -R⁴-C(=O)-; R⁴ represents a divalent hydrocarbon group having 1 to 20 carbon atoms, and preferable specific examples of R⁴ include an alkylene group, a cycloalkylene group, an arylene group and an aralkylene group; and R⁴ is particularly preferably a divalent group selected from -CH₂- and -R"-Ph-CH₂- where R" represents a hydrocarbon group having 1 to 10 carbon atoms and Ph represents a p-phenylene group.

Examples of the method for converting the terminal hydroxy group of the hydroxy-terminated hydrogenated polybutadiene based polymer into an oxymetal group include the methods in which the above hydroxy-terminated polymer is reacted respectively with an alkali metal such as Na and K; a metal hydride such as NaH; a metal alkoxide such as NaOCH₃; and a caustic alkali such as NaOH and KOH.

In the above described methods, there can be obtained an olefin-terminated hydrogenated polybutaidene based polymer having nearly the same molecular weight as that of the hydroxy-terminated hydrogenated polybutadiene based polymer used as a starting material; however, for the purpose of obtaining a polymer having a higher molecular weight, before the organic halogen compound of the above general formula is reacted, a polyvalent organic halogen compound having 2 or more halogen atoms in one molecule such as methylene chloride, bis(chloromethyl)benzene and bis(chloromethyl) ether is reacted to increase the molecular weight, and thereafter, the organic halogen compound represented by the above general formula is reacted; in this way, an olefin group-terminated hydrogenated polybutadiene based polymer having a higher molecular weight can be obtained.

Specific examples of the organic halogen compound represented by the above general formula include allyl chloride, allyl bromide, vinyl(chloromethyl)benzene, allyl(chloromethyl)benzene, allyl(bromomethyl)benzene, allyl(chloromethyl)ether, allyl(chloromethoxy)benzene, 1-butenyl(chloromethyl)ether, 1-hexenyl(chloromethoxy)benzene, and allyloxy(chloromethyl)benzene; however, the organic halogen compound is not limited to these examples. Among these examples, ally chloride is preferable because of low price and ease of reaction.

In the introduction of the reactive silicon groups into the olefin-terminated hydrogenated polybutadiene based polymer, similarly to the case of isobutylene based polymer having the reactive silicon groups at the molecular chain terminals, the target polymer can be manufactured by making the olefin-terminated hydrogenated polybutadiene based polymer undergo addition reaction with the aid of a platinum based catalyst with, for example, a hydrosilane compound formed by bonding a hydrogen atom to the group represented by Formula (1), preferably a hydrosilane compound formed by bonding a hydrogen atom to the group represented by Formula (3).

Examples of the transparent material used in the present invention include glass, and synthetic resins such as polycarbonate, polymethylmethacryalte, polystyrene, polyvinyl chloride; glass is preferable. A transparent material such as glass usually does not have a layer to intercept or attenuate light, in particular, ultraviolet light; however, according to a method of the present invention, sealing without deterioration with time can be applied even to such a transparent material. Additionally, according to the present invention, sealing without deterioration can be carried out even when sealants such as a moisture curable polyurethane and a modified silicone (a reactive silicon group-containing polyether) undergo deterioration even with glass having a layer to intercept or attenuate light, in particular, ultraviolet light (even when substantially there is no layer to intercept or attenuate light, in particular, ultraviolet light).

Examples of the compounds to be used for a photocatalytic layer to decompose dirt by the action of a photocatalyst on the surface of a transparent material include TiO₂, SrTiO₃, ZnO, CdS and SnO₂; TiO₂ is particularly preferable. A photocatalytic layer is usually formed of fine particles of these compounds. The particle size of such fine particles is preferably 0.005 to 1 µm, and particularly preferably 0.01 to 0.3 µm. The thickness of a photocatalytic layer is preferably 0.01 to 10 µm. Formation of a photocatalytic layer on a transparent material can use methods involving solutions, soaking in dispersion liquids, sputtering, thermal spray, spray and the like.

A photocatalytic layer can also include a hydrophilic substance to wash away dirt along with water such as rain water. Examples of the compound to be used as a hydrophilic substance include inorganic based oxides, in particular, silicon oxides such as silica. A photocatalytic layer can be used also as a hydrophilic layer, but a layer including both a photocatalytic layer and a hydrophilic layer other than the photocatalytic layer, for example, a layer including both TiO₂ and silica, is particularly preferable because of marked anti-staining action. Additionally, a photocatalytic layer can include antibacterial metals, metal compounds or organic compounds, thereby enabling to prevent mildew generation. Japanese Patent Laid-Open No. 2002-167871 describes substances having photocatalytic action and photocatalytic layers, including descriptions of various aspects other than the above descriptions; such various aspects can be utilized in the present invention.

The sealants used in the present invention can be used also for transparent materials provided with anti-staining layers containing hydrophilic substance but not containing photocatalysts.

No particular constraint is imposed on the method for fitting the transparent material of the present invention, but common construction methods can be applied; examples of preferable methods include glass curtain wall construction method, sash frame inset construction method, metal curtain wall construction method, glass screen construction method, structural sealant glazing system construction method (SSG construction method), tempered glass screen construction method, dot point glazing construction method (DPG construction method) and metal point glazing construction method (MPG construction method).

Examples of the above described glass curtain wall construction method include unit type curtain wall construction method, knockdown type curtain wall construction method, combination type curtain wall construction method.

When glass is used in the present invention, any type of glass can be used without constraint; however, examples of preferable types of glass include float plate glass, polished plate glass, figured plate glass, wire glass, line wire plate glass, heat absorbing plate glass, heat reflection glass, tempered glass, doubly tempered glass, laminated glass, double glass, vacuum double glass, highly heat blocking heat insulating double glass, antifire glass, electromagnetic wave blocking glass and other various types of functional glass.

No particular constraint is imposed on the sealing method using the sealant of the present invention; however, a preferable method includes the following steps: cleaning of the adherend surface, insertion of a backup material, placement of masking tape, application of primer, filling of a sealant, finishing the sealant, removal of the masking tape, cleaning and aging.

The cleaning of the adherend surface is conducted for the purpose of removing adhesion-inhibiting materials such as rust, oily dirt, dust, mortar debris, and coating materials. It is necessary that the cleaning is carried out according to a method appropriate for the adherend concerned.

It is to be noted that before transition to the next step, attention is paid so that the adherend surface is dried.

The backup material is inserted for the purpose of ensuring double sided adhesion and adjustment of filling depth. As the backup material, polyethylene closed cell foam, polyethylene continuous cell foam + polyethylene closed cell foam, synthetic rubber and the like are usually used. As the synthetic rubber, materials such as chloroprene, EPDM and polyvinyl chloride resin are generally used.

The masking tape is used for the purpose of preventing the components from staining in the next and later steps and neatly and continuously forming the lines of both edges of the sealant. There are used materials which can be used as common masking tape.

The primer is applied according to need onto the adherend surface for the purpose of adhering together the adherend surface and the sealant. No particular constraint is imposed on the primer used, and primers generally used for glass surface can be used. Preferable examples of the primer can include silicone based primers and silane based primers.

The filling of the sealant is carried out by using a gun equipped with a nozzle fitting the width of the joint in such a manner starting from the joint bottom while the sealant is being pressurized for the purpose of preventing empty gap formation, non-filled portion formation and air interfusion.

The finishing method of the sealant is such that the sealant is filled in the joint and subjected to finishing with a spatula. When finishing with a spatula, usual finishing with a spatula may be applied; however, it is particularly preferable that a spatula formed of polyethylene foam backer, rubber and the like is dipped in an organic solvent such as kerosene, n-hexane and toluene, and the surface of the sealant is rubbed with pressure along one and the same direction with the aid of the spatula.

The removal of the masking tape is carried out immediately after the finishing with a spatula.

The cleaning is carried out for the circumference of the joint after the removal of the masking tape.

Thereafter, aging is carried out using appropriate materials such as film, sheet, plywood and the like because uncured sealant causes pollution of the surrounding areas.

In the sealant of the present invention, a curing catalyst may be used or may not be used; however, it is preferable to use a curing catalyst because use of a curing catalyst makes the curing rate larger. When a curing catalyst is used, those curing catalyst well known in the art can be widely used. Examples of such curing catalysts include silanol condensation catalysts including titanium compounds such as tetrabutyl titanate, tetrapropyl titanate and titanium tetraacetylacetonate; tetravalent tin compounds such as dibutyltin dilaurate, dibutyltin maleate, dibutyltin phthalate, dibutyltin dioctate, dibutyltin diethylhexanoate, dibutyltin dimethylmaleate, dibutyltin diethylmaleate, dibutyltin dibutylmaleate, dibutyltin dioctylmaleate, dibutyltin ditridecylmaleate, dibutyltin dibenzylmaleate, dibutyltin diacetate, dioctyltin diethylmaleate, dioctyltin dioctylmaleate, dibutyltin dimethoxide, dibutyltin dinonylphenoxide, dibutenyltin oxide, dibutyltin diacetylacetonate, dibutyltin diethylacetoacetonate, and a reaction product of dibutyltin oxide and a phthalic acid ester; divalent tin compounds such as tin octylate, tin naphthenate, tin stearate, tin versatate; organoaluminum compounds such as aluminum trisacetylacetonate, aluminum trisethylacetoacetate and diisopropoxyaluminum ethyl acetoacetate; zirconium compounds such as zirconium tetraacetylacetonate; lead octylate; amine based compounds such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7 (DBU), and salts between these amine based compounds and carboxylic acids and the like; low molecular weight polyamide resins obtained from excessive polyamines and polybasic acids; reaction products between excessive polyamines and epoxy compounds; amino group-containing silane coupling agents such as γ-aminopropyltrimethoxysilane and N-(β-aminoethyl)aminopropylmethyldimethoxysilane: moreover, examples of such curing catalysts include silanol condensation catalysts well known in the art such as other acidic catalysts and basic catalysts. These catalysts can be used either each alone or in combinations of two or more thereof.

The used amount of each of these curing catalysts is preferably of the order of 0.1 to 20 parts by weight, and more preferably 1 to 10 parts by weight, in relation to 100 parts by weight of the reactive silicon group-containing polymer. When the used amount of the curing catalyst is too small, the curing rate becomes slow, and the curing reaction can hardly proceed to a sufficient extent, so that a too small used amount of the curing catalyst is not preferable. On the other hand, when the used amount of the curing catalyst is too large, local heat generation and local foaming occur when curing, and a satisfactory cured substance can hardly be obtained, so that a too large used amount of the curing catalyst is not preferable.

To the sealant of the present invention, for the purpose of more enhancing the activity of the condensation catalyst, there may be added a silicon compound represented by a general formula RₐSi(OR)₄₋ₐ where each R is independently a substituted or a non-substituted hydrocarbon group having 1 to 20 carbon atoms, and moreover, a is any of 0, 1, 2 and 3). No particular constraint is imposed on the above described silicon compounds; however, preferable are silicon compounds in which R in the general formula is an aryl group having 6 to 20 carbon atoms such as phenyltrimethoxysilane, phenylmethyldimethoxysilane, phenyldimethylmethoxysilane, diphenyldimethoxysilane, diphenyldiethoxysilane and triphenylmethoxysilane, because these compounds each have a large effect of accelerating the curing reaction of a composition. In particular, diphenyldimethoxysilane and diphenyldiethoxysilane are particularly preferable because of low cost and ease of availability. The blended amount of these silicon compounds is preferably 0.01 to 20 parts by weight, and further preferably 0.1 to 10 parts by weight in relation to 100 parts by weight of the reactive silicon group-containing polymer. When the blended amount of the silicon compound is less than the above ranges, sometimes the effect of accelerating the curing reaction becomes small. On the other hand, when the blended amount of the silicon compound exceeds the above ranges, sometimes the hardness and the tensile strength of the cured substance are decreased.

To the sealant of the present invention, there can be added as an adhesion-imparting agent a silane coupling agent, a reaction product of the silane coupling agent, or a compound other than the silane coupling agent. Specific examples of the silane coupling agent include isocyanate group-containing silanes such as γ-isocyanatepropyltrimethoxysilane, γ-isocyanatepropyltriethoxysilane, γ-isocyanatepropylmethyldiethoxysilane and γ-isocyanatepropylmethyldimethoxysilane; amino group-containing silanes such as γ-aminopropyltrimethoxysilane, γ-aminopropyltriethoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-ureidopropyltrimethoxysilane, N-phenyl-γ-aminopropyltrimethoxysilane, N-benzyl-γ-aminopropyltrimethoxysilane, and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane; vinyl-type unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; and isocyanurate silanes such as tris(trimethoxysilyl)isocyanurate. Additionally, the following derivatives obtained by modifying these compounds can be used as silane coupling agents: amino-modified silylpolymer, silylated amionopolymer, unsaturated aminosilane complex, phenylamino-long chain alkylsilane, aminosilylated silicone and silylated polyester. A silane coupling agent is usually used within a range from 0.1 to 20 parts by weight in relation to 100 parts by weight of the reactive silicon group-containing polymer; particularly, a silane coupling agent is preferably used within a range from 0.5 to 10 parts by weight.

The effect of the silane coupling agent added to the sealant of the present invention is such that a marked adhesiveness improvement effect is displayed to various adherends under either non-primer conditions or primer-treatment conditions. When the silane coupling agent is used under the non-primer conditions, the improvement effect of the adhesiveness to various adherends is particularly remarkable. Specific examples other than the silane coupling agents are not particularly limited, but include epoxy resins, phenolic resins, sulfur, alkyl titanates and aromatic polyisocyanates. The above described adhesion-imparting agents may be used either each alone or in admixtures of two or more thereof. Addition of these adhesion-imparting agents can improve the adhesiveness to adherends.

The sealant of the present invention can be blended with various fillers. Examples of the fillers include reinforcing fillers such as fumed silica, precipitated silica, crystalline silica, fused silica, dolomite, anhydrous silicic acid, hydrous silicic acid and carbon black; fillers such as ground calcium carbonate, precipitated calcium carbonate, magnesium carbonate, diatomite, sintered clay, clay, talc, titanium oxide, bentonite, organic bentonite, ferric oxide, aluminum fine powder, flint powder, zinc oxide, active zinc white, shirasu balloon, glass microballoon, organic microballoons of phenolic resin and vinylidene chloride resin, and resin powders such as PVC powder and PMMA powder; and fibrous fillers such as asbestos, glass fiber and glass filament. When a filler is used, the used amount thereof is 1 to 300 parts by weight, and preferably 10 to 200 parts by weight in relation to 100 parts by weight of the reactive silicon group-containing polymer.

When it is desired to obtain a cured substance higher in strength by use of these fillers, preferable is a filler mainly selected from fumed silica, precipitated silica, crystalline silica, fused silica, dolomite, anhydrous silicic acid, hydrous silicic acid, carbon black, surface treated fine calcium carbonate, sintered clay, clay and active zinc white; a preferable effect is obtained when such a filler is used within a range from 1 to 200 parts by weight in relation to 100 parts by weight of the reactive silicon group-containing polymer. Additionally, when it is desired to obtain a cured substance low in tensile strength and large in elongation at break, a preferable effect is obtained by use of a filler mainly selected from titanium oxide, calcium carbonate, magnesium carbonate, talc, ferric oxide, zinc oxide and shirasu balloon within a range from 5 to 200 parts by weight in relation to 100 parts by weight of the reactive silicon group-containing polymer. It is to be noted that in general, the calcium carbonate exhibits, with increasing specific surface area value thereof, an increasing improvement effect of the tensile strength at break, elongation at break and adhesiveness of the cured substance. Needless to say, these fillers may be used either each alone or in admixtures of two or more thereof. Precipitated calcium carbonate subjected to surface treatment with fatty acid and ground calcium carbonate not subjected to surface treatment having a particle size of 1 µ or more can be concomitantly used.

For the purpose of improving the workability (cutting property, etc.) of the sealant and deglossing the surface of the cured substance, organic balloons and inorganic balloons may be added. Such fillers can be subjected to surface treatment, and may be used each alone or can be used in admixtures of two or more thereof. For the purpose of improving the workability (cutting property, etc.), the particle sizes of these balloons are preferably 0.1 mm or less. For the purpose of deglossing the surface of the cured substance, the particle sizes are preferably 5 to 300 µm.

Additionally, a scale-like or granulated material having a diameter of 0.1 mm or more, preferably of the order of 0.1 to 5.0 mm is blended, the surface of the cured substance comes to be a dispersed sand-like or sandstone-like surface with a rough texture, while use of a scale-like material provides an irregular surface based on the scale-like shape of the material.

The preferable diameter, blended amount and materials for the scale-like or granulated material are described in Japanese Patent Laid-Open No. 9-53063 as follows.

The diameter is 0.1 mm or more, preferably of the order of 0.1 to 5.0 mm, and there is used a material having an appropriate size in conformity with the material quality and pattern of exterior wall. Materials having a diameter of the order of 0.2 mm to 5.0 mm and materials having a diameter of the order of 0.5 mm to 5.0 mm can also be used. In the case of a scale-like material, the thickness is set to be as thin as the order of 1/10 to 1/5 the diameter (the order of 0.01 to 1.00 mm). The scale-like or granulated material is transported to the construction site as a sealant in a condition that the material is beforehand mixed in the main component of the sealant, or is mixed in the main component of the sealant at the construction site when the sealant is used.

The scale-like or granulated material is blended in a content of the order of 1 to 200 parts by weight in relation to 100 parts by weight of a sealant composition. The blended amount is appropriately selected depending on the size of the scale-like or granulated material, and the material quality and pattern of exterior wall.

As the scale-like or granulated material, natural products such as silica sand and mica, synthetic rubbers, synthetic resins and inorganic substances such as alumina are used. The material is colored in an appropriate color to heighten the design quality when filled in the joints.

A preferable finishing method and the like are described in Japanese Patent Laid-Open No. 9-53063.

Additionally, when a balloon (preferably the mean particle size thereof is 0.1 mm or more) is used for a similar purpose, the surface is formed to have a dispersed sand-like or sandstone-like surface with a rough texture, and a reduction of weight can be achieved. The preferable diameter, blended amount and materials for the balloon are described in Japanese Patent Laid-Open No. 10-251618 as follows.

The balloon is a sphere-shaped material with a hollow interior. Examples of the material for such a balloon include inorganic based materials such as glass, shirasu and silica; and organic based materials such as phenolic resin, urea resin, polystyrene and Saran™; however, the material concerned is not limited to these examples; an inorganic based material and an organic based material can be compounded, or can be laminated to form multiple layers. An inorganic based balloon, an organic based balloon, a balloon made of a compounded inorganic-organic material or the like can be used. Additionally, as a balloon to be used, either one type of balloon or an admixture of multiple types of balloons can be used. Moreover, a balloon with the processed surface thereof or with the coated surface thereof can be used, and additionally, a balloon with the surface thereof subjected to treatment with various surface treatment agents can also be used. More specifically, examples are included in which an organic based balloon is coated with calcium carbonate, talc, titanium oxide and the like, and an inorganic based balloon is subjected to surface treatment with a silane coupling agent.

For the purpose of obtaining a dispersed sand-like or sandstone-like surface with a rough texture, the particle size of the balloon is preferably 0.1 mm or more. A balloon of a particle size of the order of 0.2 mm to 5.0 mm or a balloon of a particle size of the order of 0.5 mm to 5.0 mm can also be used. Use of a balloon of a particle size of less than 0.1 mm sometimes only increases the viscosity of the composition, and yields no rough texture, even when the used amount of the balloon is large. The blended amount of the balloon can be easily determined in conformity with the desired degree of the dispersed sand-like or sandstone-like rough texture. Usually, it is desirable that a balloon of 0.1 mm or more in particle size is blended in a ratio of 5 to 25 vol% in terms of the volume concentration in the composition. When the volume concentration of the balloon is less than 5 vol%, no rough texture can be obtained, while when the volume concentration of the balloon exceeds 25 vol%, the viscosity of the sealant tends to become high to degrade the workability, and the modulus of the cured substance becomes high, so that the basic performance of the sealant tends to be impaired. The preferable volume concentration to balance with the basic performance of the sealant is 8 to 22 vol%.

When a balloon is used, there can be added an antislip agent described in Japanese Patent Laid-Open No. 2000-154368 and an amine compound to make irregular and degloss the surface of the cured substance described in Japanese Patent Laid-Open No. 2001-164237, in particular, a primary amine and/or a secondary amine having a melting point of 35°C or higher.

Specific examples of the balloon are described in the following publications: Japanese Patent Laid-Open Nos. 2-129262, 4-8788, 4-173867, 5-1225, 7-113073, 9-53063, 10-251618, 2000-154368 and 2001-164237, and WO97/05201 pamphlet.

When the composition of the present invention includes the particles of a cured sealant, the cured sealant can make irregularities on the surface to improve the design quality. The preferable diameter, blended amount and materials of the cured sealant particles are described in Japanese Patent Laid-Open No. 2001-115142 as follows. The diameter is preferably of the order of 0.1 mm to 1 mm, and further preferably of the order of 0.2 to 0.5 mm. The blended amount is preferably 5 to 100 wt%, and further preferably 20 to 50 wt% in the curable composition. Examples of the materials include urethane resin, silicone, modified silicone and polysulfide rubber. No constraint is imposed on the materials as long as the materials can be used as sealants; however, modified silicone sealants are preferable.

A plasticizer component can be added to the sealant of the present invention. No particular constraint is imposed on the plasticizer; however, depending on the purpose of regulating physical property and regulating behavior and condition, and the like, examples of the plasticizer include phthalates such as dibutyl phthalate, diheptyl phthalate, di(2-ethylhexyl) phthalate and butyl benzyl phthalate; nonaroamtic dibasic acid esters such as dioctyl adipate, dioctyl sebacate, dibutyl sebacate and isodecyl succinate; aliphatic esters such as butyl oleate and methyl acetylrecinoleate; phosphates such as tricresyl phosphate and tributyl phosphate; trimellitates; chlorinated parafins; hydrocarbon based oils such as alkyldiphenyls and partially hydrogenated terphenyls; process oils; epoxy plasticizers such as epoxidized soybean oil and benzyl epoxystearate.

Additionally, a polymer plasticizer can be used. When a polymer plasticizer is used, the initial physical properties are maintained over a longer period of time than when there is used a low molecular weight plasticizer which is a plasticizer containing no polymer component in the molecule thereof, and there can be improved the drying property (also referred to as coating property) as observed when an alkyd coating material is applied onto the cured substance concerned. Examples of the polymer plasticizer include vinyl based polymers obtained by polymerizing vinyl based monomers by means of various methods; polyalkylene glycol esters such as diethylene glycol dibenzoate, triehtylene glycol dibenzoate, pentaerithritol ester; polyester based plasticizers obtained from dibasic acids such as sebacic acid, adipic acid, azelaic acid and phthalic acid and dihydric alcohols such as ethylene glycol, diethylene glycol, triethylene glycol, propylene glycol and dipropylene glycol; polyethers including polyether polyols each having a molecular weight of 500 or more, additionally 1000 or more such as polyethylene glycol, polyprolylene glycol and polytetramethylene glycol, and the derivatives of these polyether polyols in which the hydroxy groups in these polyether polyols are substituted with ester groups, ether groups and the like; polystyrenes such as polystyrene and poly-α-methylstyrene; and polybutadiene, polybutene, polyisobutylene, butadiene-acrylonitrile and polychloroprene. However, the polymer plasticizer concerned is not limited to these examples.

These plasticizers can be used either each alone or in admixtures of two or more thereof. Additionally, the plasticizers can also be blended when the polymer is produced.

It is preferable that particularly an acryl-based plasticizer is concomitantly used in the sealant of the present invention. The acryl-based plasticizer is a polymer made of an acryl based monomer such as an acrylate and an acrylamide. Preferable are polymers including copolymers of acrylates, and copolymers of acrylates and other monomers. Specific examples of the acrylates include the acrylates used for manufacturing the acryl based polymers of the present invention. Alkyl acrylates are preferable, and particularly preferable are alkyl acrylates having 1 to 8 carbon atoms such as butyl acrylate and ethyl acrylate. Addition of such a plasticizer makes it possible to regulate the viscosity and slump property of the curable composition and the mechanical properties such as tensile strength and elongation at break of the cured substance obtained by curing the composition, and additionally makes it possible to maintain a satisfactory weather resistance of adhesiveness over a longer period of time as compared to the case in which a plasticizer containing no acryl component in the molecule thereof is used.

The number average molecular weight of the above described acryl-based plasticizer is preferably 500 to 15,000, further preferably 800 to 10,000 and more preferably 1,000 to 8,000. When the molecular weight is too low, the plasticizer is removed with time thermally and by rainfall, and hence it is made impossible to maintain the initial physical properties over a long period of time, and the weather resistance tends to be hardly improved. Additionally, when the molecular weight is too high, the viscosity becomes high and the workability tends to be degraded. The acryl-based plasticizer acts as a plasticizer, and hence is usually lower in viscosity than the reactive silicon group-containing polymer. In particular, it is desirable that the acryl-based plasticizer is lower in viscosity than the reactive silicon group-containing polymer. As for the number average molecular weight, it is desirable that the acryl-based plasticizer is smaller in number average molecular weight by 1,000 or more, further by 2,000 or more and particularly by 3,000 or more than the reactive silicon group-containing polymer. The number average molecular weight of the acryl-based plasticizer is measured as a molecular weight relative to polystyrene standard based on GPC. Additionally, the molecular weight distribution (Mw/Mn) is measured with GPC (relative to polystyrene standard).

Specific examples of the acryl-based plasticizer include (meth)acrylate based polymers having a molecular weight distribution of 1.8 or less manufactured by the living radical polymerization proposed in Japanese Patent Laid-Open No. 2000-178456; however, the acryl-based plasticizer is not particularly limited to these examples. Additionally, there can be used polymers based on the SGO process, manufactured by Toagosei Co., Ltd. and Johnson Polymer, Inc., and described in "Kogyo Zairyo (Materials & Technology)," p. 110, August, 1998. The SOG polymers can be obtained by continuous block polymerization of acrylate based monomers at high temperatures and under high pressures. Usually used are acryl-based plasticizers which are liquid at room temperature and having no functional groups. These may be used either each alone or in combinations of two or more thereof. Additionally, where necessary, these may be used simultaneously with low molecular weight plasticizers within a range not adversely affecting the physical properties. These acryl-based plasticizers may be either acryl based polymers containing no reactive silicon groups or reactive silicon group-containing acryl based polymers. The reactive silicon groups can be introduced by making use of the hydroxy groups in hydroxy group-containing polymers based on the SGO process. Reactive silicon group-containing acryl based polymers act as reactive plasticizers, and have effects such that bleeding of the plasticizers is eliminated in the cured substances. When more than one reactive silicon groups are present on average in one molecule, the effect on the tensile strength of the cured substance becomes large. As a reactive plasticizer, preferable is an acryl-based plasticizer such as an acryl based polymer containing on average one or less reactive silicon group in one molecule.

To the sealant of the present invention, according to need, there may be added a physical property regulator to regulate the tensile strength of the produced cured substance. No particular constraint is imposed on the physical property regulator. However, examples of the physical property regulator include alkylalkoxysilanes such as methyltrimethoxysilane, dimethyldimethoxysilane, trimethylmethoxysilane and n-propyltrimethoxysilane; alkoxysilanes having functional groups such as alkylisopropenoxy silanes including dimethyldiisopropenoxysilane, methyltriisopropenoxysilane, γ-glycidoxypropylmethyldiisopropenoxysilane, and γ-glycidoxypropylmethyldimethoxysilane, γ-glycidoxypropyltrimethoxysilane, vinyltrimethoxysilane, vinyldimethylmethoxysilane, γ-aminopropyltrimethoxysilane, N-(β-aminoethyl)aminopropylmethyldimethoxysilane, γ-mercaptopropyltrimethoxysilane and γ-mercaptopropylmethyldimethoxysilane; silicone varnishes; and polysiloxanes. The use of the physical property regulator makes it possible to increase the hardness obtained when the sealant of the present invention is cured, or to decrease the hardness to display the elongation at break. The above described physical property regulators may be used either each alone or in combinations of two or more thereof.

It is to be noted that a compound to hydrolytically produce a compound having a monovalent silanol group in the molecule thereof has an effect to decrease the modulus of the cured substance without degrading the stickiness of the surface of the cured substance. Particularly, a compound to produce trimethylsilanol is preferable. Examples of the compound to hydrolytically produce a compound having a monovalent silanol group in the molecule thereof include a compound described in Japanese Patent Laid-Open No. 5-117521. Additionally, examples of such a compound include a compound which is a derivative of an alkyl alcohol such as hexanol, octanol or decanol, and produces a silicon compound to hydrolytically produce R₃SiOH such as trimethylsilanol, and a compound described in Japanese Patent Laid-Open No. 11-241029 which is a derivative of a polyhydric alcohol having three or more hydroxy groups such as trimethylolpropane, glycerin, pentaerythritol or sorbitol, and produces a silicon compound to hydrolytically produce R₃SiOH such as trimethylsilanol.

Additionally, there can be cited such a compound as described in Japanese Patent Laid-Open No. 7-258534 which is a derivative of oxyalkylene polymer and produces a silicon compound to hydrolytically produce R₃SiOH such as trimethylsilanol. Moreover, there can be used a polymer described in Japanese Patent Laid-Open No. 6-279693 which contains a hydrolyzable silicon-containing group capable of cross linking and a silicon-containing group capable of hydrolytically forming a monosilanol-containing compound.

The physical property regulator is used within a range from 0.1 to 20 parts by weight, and preferably from 0.5 to 10 parts by weight, in relation to 100 parts by weight of the reactive silicon group-containing polymer.

To the sealant of the present invention, according to need, a thixotropy providing agent (antisagging agent) may be added for the purpose of preventing sagging and improving workability. No particular constraint is imposed on the antisagging agent; however, examples of the antisagging agent include polyamide waxes; hydrogenated castor oil derivatives; and metal soaps such as calcium stearate, aluminum stearate and barium stearate. These thixotropy providing agents (antisagging agents) may be used either each alone or in combinations of two or more thereof. The thixotropy providing agents each are used within a range from 0.1 to 20 parts by weight in relation to 100 parts by weight of the reactive silicon group-containing polymer.

In the sealant of the present invention, a compound can be used which contains an epoxy group in one molecule. Use of an epoxy group-containing compound can increase the recovery property of the cured substance. Examples of the epoxy group-containing compound include compounds such as epoxidized unsaturated oils and fats, epoxidized unsaturated fatty acid esters, alicyclic epoxy compounds and epichlorohydrin derivatives, and admixtures of these compounds. More specific examples include epoxidized soybean oil, epoxidized flaxseed oil, di(2-ethylhexyl)-4,5-epoxycyclohexane-1,2-dicarboxylate (E-PS), epoxyoctyl stearate and epoxybutyl stearate. Among these, E-PS is particularly preferable. For the purpose of enhancing the recovery property of the cured substance, it is preferable to use a compound containing one epoxy group in the molecule thereof. It is recommended that these epoxy compounds each are used within a range from 0.5 to 50 parts by weight in relation to 100 parts by weight of the reactive silicon group-containing polymer.

For the sealant of the present invention, a photocuring substance can be used. Use of a photocuring substance forms a coating film of the photocuring substance on the surface of the cured substance to improve the stickiness and the weather resistance of the cured substance. A photocuring substance means a substance which undergoes a chemical change, caused by action of light, of the molecular structure thereof in a fairly short time to result in changes of the physical properties such as curing. Among such a large number of compounds known are organic monomers, oligomers, resins and compositions containing these substances, and any commercially available substances concerned can optionally be adopted. As representative photocuring substances, unsaturated acryl based compounds, polyvinyl cinnamates and azidized resins and the like can be used. The unsaturated acryl based compounds are monomers, oligomers and admixtures of the monomers and the oligomers, the monomers and oligomers each having one or a few acryl based or methacryl based unsaturated groups; examples of the unsaturated acryl based compounds include monomers such as propylene (or butylene, or ethylene)glycol di(meth)acrylate and neopentylglycol di(meth)acrylate, and oligoesters of 10,000 or less in molecular weight, related to these monomers. Specific examples include special acrylates (bifunctional) such as ARONIX M-210, ARONIX M-215, ARONIX M-220, ARONIX M-233, ARONIX M-240 and ARONIX M-245; special acrylates (trifunctional) such as ARONIX M-305, ARONIX M-309, ARONIX M-310, ARONIX M-315, ARONIX M-320 and ARONIX M-325; and special acrylates (multifunctional) such as ARONIX M-400. Those compounds which each have acrylic functional groups are particularly preferable, and additionally, those compounds which each have, on average, three or more acrylic functional groups in one molecule are preferable (all the aforementioned ARONIXs are the products of Toagosei Co., Ltd.). Examples of the polyvinyl cinnamates include photosensitive resins having cinnamoyl groups as photosensitive groups, namely, those compounds obtained by esterification of polyvinyl alcohol with cinnamic acid; and additionally, a large number of derivatives of polyvinyl cinnamates. Azidized resins are known as photosensitive resins having azide groups as photosensitive groups; common examples of the azidized resins include a rubber photosensitive solution added with a diazide compound as photosensitive agent, and additionally, those compounds detailed in "Photosensitive Resins" (published by Insatsu Gakkai Shuppanbu, March 17, 1972, p.93, p.106 and p.117); and these compounds can be used either each alone or in admixtures thereof, and in combination with sensitizers to be added according to need. It is to be noted that addition of sensitizers such as ketones and nitro compounds and accelerators such as amines sometimes enhances the effect.

It is preferable that the photocuring substance is used within a range from 0.01 to 20 parts by weight and more preferably from 0.5 to 10 parts by weight in relation to 100 parts by weight of the reactive silicon group-containing polymer; when the content of the photocuring substance is less than 0.01 part by weight, the effect to increase the weather resistance is small, while when the content exceeds 20 parts by weight, the cured substance tends to be too hard and cracked, so that neither the content less than 0.01 part by weight nor the content exceeding 20 parts by weight is preferable.

For the composition of the present invention, an oxygen-curing substance can be used. Examples of the oxygen-curing substance include unsaturated compounds reactable with the oxygen in the air, which react with the oxygen in the air and form a cured coating film in the vicinity of the surface of the cured substance to act to prevent the surface stickiness and the sticking of dust and grime to the surface of the cured substance and to do the like. Specific examples of the oxygen-curing substance include drying oils represented by wood oil, flaxseed oil and the like and various alkyd resins obtained by modifying these compounds; acryl based polymers, epoxy based resins and silicon resins all modified with drying oils; liquid polymers such as 1,2-polybutadiene and 1,4-polybutadiene obtained by polymerizing or copolymerizing diene based compounds such as butadiene, chloroprene, isoprene, 1,3-pentadiene, and polymers derived from C5 to C8 dienes, liquid copolymers such as NBR, SBR and the like obtained by copolymerizing these diene based compounds with monomers such as acrylonitrile, styrene and the like having copolimerizability so as for the diene based compounds to dominate, and various modified substances of these compounds (maleinized modified substances, boiled oil-modified substances, and the like). These substances can be used either each alone or in combinations of two or more thereof. Of these substances, wood oil and liquid diene based polymers are particularly preferable. Additionally, in some cases, when catalysts to accelerate the oxidation curing reaction and metal dryers are used in combination with these substances, the effect is enhanced. Examples of these catalysts and metal dryers include metal salts such as cobalt naphtenate, lead naphthenate, zirconium naphthenate, cobalt octylate and zirconium octylate; and amine compounds. The used amount of the oxygen-curing substance is recommended such that the oxygen-curing substance is used within a range from 0.1 to 20 parts by weight and further preferably from 1 to 10 parts by weight in relation to 100 parts by weight of the reactive silicon group-containing polymer; when the used amount is less than 0.1 part by weight, improvement of staining property becomes insufficient, while when the used amount exceeds 20 parts by weight, the tensile property and the like of the cured substance tends to be impaired. It is recommended that the oxygen-curing substance is used in combination with a photocuring substance as described in Japanese Patent Laid-Open No. 3-160053.

For the composition of the present invention, an antioxidant (antiaging agent) can be used. Use of an antioxidant can increase the weather resistance of the cured substance. Examples of the antioxidant can include hindered phenol based antioxidants, monophenol based antioxidants, bisphenol based antioxidants and polyphenol based antioxidants, hindered phenol based antioxidants being particularly preferable. Similarly, the following hindered amine based photostabilizers can also be used: TINUVIN 622LD, TINUVIN 144; CHIMASSORB944LD and CHIMASSORB119FL (all manufactured by Ciba-Geigy Japan Ltd.); MARK LA-57, MARK LA-62, MARK LA-67, MARK LA-63 and MARK LA-68 (all manufactured by Adeka Argus Chemical Co., Ltd.); and SANOL LS-770, SANOL LS-765, SANOL LS-292, SANOL LS-2626, SANOL LS-1114 and SANOL LS-744 (all manufactured by Sankyo Co., Ltd.). Specific examples of the antioxidants are described also in Japanese Patent Laid-Open Nos. 4-283259 and 9-194731. The used amount of the antioxidant is recommended such that the antioxidant is used within a range from 0.1 to 10 parts by weight and further preferably from 0.2 to 5 parts by weight in relation to 100 parts by weight of the reactive silicon group-containing polymer.

For the sealant of the present invention, a photostabilizer can be used. Use of a photostabilizer can prevent the photooxidation degradation of the cured substance. Examples of the photostabilizer include benzotriazole based compounds, hindered amine based compounds, benzoate based compounds and the like; hindered amine based compounds are particularly preferable. The used amount of the photostabilizer is recommended such that the photostabilizer is used within a range from 0.1 to 10 parts by weight and further preferably from 0.2 to 5 parts by weight in relation to 100 parts by weight of the reactive silicon group-containing polymer. Specific examples of the photostabilizer are described also in Japanese Patent Laid-Open No. 9-194731.

When the photocuring substance is used for the sealant of the present invention, in particular, when an unsaturated acryl based compound is used, it is preferable to use a tertiary amine-containing hindered amine based photostabilizer as a hindered amine based photostabilizer as described in Japanese Patent Laid-Open No. 5-70531 for the purpose of improving the storage stability of the composition. Examples of the tertiary amine-containing hindered amine based photostabilizer include TINUVIN 622LD, TINUVIN 144 and CHIMASSORB119FL (all manufactured by Ciba-Geigy Japan Ltd.); MARK LA-57, LA-62, LA-67 and LA-63 (all manufactured by Adeka Argus Chemical Co., Ltd.); and SANOL LS-765, LS-292, LS-2626, LS-1114 and LS-744 (all manufactured by Sankyo Co., Ltd.).

For the sealant of the present invention, an ultraviolet absorber can be used. Use of an ultraviolet absorber can increase the surface weather resistance of the cured substance. Examples of the ultraviolet absorber include benzophenone based compounds, benzotriazole based compounds, salicylate based compounds, substituted tolyl based compounds and metal chelate based compounds; benzotriazole based compounds are particularly preferable. The used amount of the ultraviolet absorber is such that the ultraviolet absorber is used within a range from 0.1 to 10 parts by weight, and further preferably from 0.2 to 5 parts by weight in relation to 100 parts by weight of the reactive silicon group-containing polymer. It is preferable that a phenol based antioxidant, a hindered phenol based antioxidant, a hindered amine based photostabilizer and a benzotriazole based ultraviolet absorber are used in combination.

The sealant of the present invention can be added with an epoxy resin, and the thus obtained sealant can be used as an elastic adhesive and the like. Examples of the epoxy resin include epichlorohydrin-bisphenol A-type epoxy resins, epichlorohydrin-bisphenol F-type epoxy resins, flame resistant epoxy resins such as glycidyl ether of tetrabromobisphenol A, novolac-type epoxy resins, hydrogenated bisphenol A-type epoxy resins, epoxy resins of the type of glycidyl ether of bisphenol A propyleneoxide adduct, p-oxybenzoic acid glycidyl ether ester-type epoxy resins, m-aminophenol based epoxy resins, diaminodiphenylmethane based epoxy resins, urethane modified epoxy resins, various alicyclic epoxy resins, N,N-diglycidylaniline, N,N-diglycidyl-o-toluidine, triglycidyl isocyanurate, polyalkylene glycol diglycidyl ether, glycidyl ethers of polyhydric alcohols such as glycerin, hydantoin-type epoxy resins and epoxidized substances of unsaturated polymers such as petroleum resins; however the epoxy resin is not limited to these examples, and commonly used epoxy resins can be used. Epoxy resins having at least two epoxy groups in one molecule are preferable because such compositions are high in reactivity when curing is made, and the cured substances can easily form three dimensional networks. Examples of further preferable epoxy resins include bisphenol A-type epoxy resins or novolac-type epoxy resins. The ratio of the used amount of each of these epoxy resins to the used amount of the reactive silicon group-containing polymer falls, in terms of weight ratio, in the range such that the polymer/epoxy resin = 100/1 to 1/100. When the ratio of the polymer/epoxy resin is less than 1/100, the effect of improving the impact resistance and the toughness of the cured substance of the epoxy resin becomes hardly obtainable, while when the ratio of the polymer/epoxy resin exceeds 100/1, the strength of the cured substance of the polymer becomes insufficient. The preferable ratio of the used amounts is varied depending on the application of the curable resin composition and hence cannot be unconditionally determined; for example, when the impact resistance, flexibility, toughness, and peel strength and the like of the cured substance of the epoxy resin are to be improved, it is recommended that in relation to 100 parts by weight of the epoxy resin, 1 to 100 parts by weight of the polymer, further preferably 5 to 100 parts by weight of the polymer is used. On the other hand, when the strength of the cured substance of the polymer is to be improved, it is recommended that in relation to 100 parts of the (A)component+(B)component, 1 to 200 parts by weight of the epoxy resin, further preferably 5 to 100 parts by weight of the epoxy resin is used.

When the epoxy resin is used, as a matter of course, a curing agent to cure the epoxy resin can be applied together. No particular constraint is imposed on the usable epoxy resin curing agent, and commonly used epoxy resin curing agents can be used. Specific examples of the epoxy resin curing agent include primary and secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, and amine-terminated polyether; tertiary amines such as 2,4,6-tris(dimethylaminomethyl)phenol and tripropylamine, and salts of these tertiary amines; polyamide resins; imidazoles; dicyandiamides; borontrifluoride complexes; carboxylic anhydrides such as phthalic anhydirde, hexahydrophthalic anhydirde, tetrahydrophthalic anhydride, dodecynylsuccinic anhydride, pyromellitic anhydride and chlorendic anhydride; alcohols; phenols; carboxylic acids; and diketone complexes of aluminum and zirconium. However, the epoxy resin curing agent is not limited to these examples. Additionally, the curing agents may be used either each alone or in combinations of two or more thereof.

When an epoxy resin curing agent is used, the used amount thereof falls within a range from 0.1 to 300 parts by weight in relation to 100 parts by weight of the epoxy resin.

As an epoxy resin curing agent, a ketimine can be used. A ketimine is stable when no moisture is present, but moisture decomposes the ketimine into a primary amine and a ketone; the thus produced primary amine acts as a room temperature curable curing agent to cure the epoxy resin. Use of a ketimine makes it possible to obtain a one liquid-type composition. Such a ketimine can be obtained by condensation reaction between an amine compound and a carbonyl compound.

For the synthesis of a ketimine, an amine compound and a carbonyl compound well known in the art can be used. For example, the following compounds can be used as such an amine compound: diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine and p,p'-biphenylenediamine; polyvalent amines such as 1,2,3-triaminopropane, triaminobenzene, tris(2-amionoethyl)amine and tetra(aminomethyl)methane; polyalkylenepolyamines such as diethylenetriamine, triethylenetriamine and tetraethylenepentamine; polyoxyalkylene based polyamines; and aminosilanes such as γ-aminopropyltriethoxysilane, N-(β-aminoethyl)-γ-aminopropyltrimethoxysilane and N-(β-aminoethyl)-γ-aminopropylmethyldimethoxysilane.
Additionally, the following compounds can be used as such a carbonyl compound: aldehydes such as acetoaldehyde, propionaldehyde, n-butylaldehyde, isobutylaldehyde, diethylacetoaldehyde, glyoxal and benzaldehyde; cyclic ketones such as cyclopentanone, trimethylcyclopentanone, cyclohexanone and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone and diisobutyl ketone; and β-dicarbonyl compounds such as acetylacetone, methyl acetoacetate, ethyl acetoacetate, dimethyl malonate, diethyl malonate, methyl ethyl malonate and dibenzoylmethane.

When an imino group is present in the ketimine, the imino group can be reacted with styrene oxide; glycidyl ethers such as butyl glycidyl ether and allyl glycidyl ether; and glycidyl esters. These ketimines may be used either each alone or in combinations of two or more thereof; these ketimines each are used within a range of 1 to 100 parts by weight in relation to 100 parts by weight of the epoxy resin; and the used amount of each of the ketimines is varied depending on the type of the epoxy resin and the type of the ketimine.

To the sealant of the present invention, various additives can be added according to need for the purpose of regulating the physical properties of the sealant or the cured substance. Examples of such additives include flame retardants, curability regulators, radical inhibitors, metal deactivators, antiozonants, phosphorus based peroxide decomposers, lubricants, pigments, foaming agents, solvents and mildewproofing agents. These various additives may be used either each alone or in combinations of two or more thereof.

For the sealant of the present invention, a primer can be used. Use of the primer can further increase the weather resistant adhesiveness. As the primers used, silicon based primers are preferable.

Additionally, addition of a -COOCH₃ group-containing compound improves the weather resistant adhesiveness of the sealant. This compound may be a plasticizer such as dimethyl adipate.

The sealant of the present invention can also be prepared as a one component-type composition curable after application with moisture in the air in such a way that all the blended components are beforehand blended together and hermetically stored. The curable composition of the present invention can also be prepared as a two component-type composition in such a way that a compound agent is prepared as a curing agent by blending together a curing catalyst, a filler, a plasticizer and water, and the thus blended material is mixed with a polymer composition before use.

When the above described sealant is of the one component-type, all the blended components are blended together beforehand, so that it is preferable that the blended components containing moisture are used after dehydrating and drying, or the components are dehydrated by reducing pressure or the like while being kneaded for blending. When the above described sealant is of the two component-type, it is not necessary to blend a curing catalyst with the main component containing a reactive silicon group-containing polymer, and hence there is little fear of gelation even when some moisture is contained in the blended components; however, when a long term storage stability is demanded, it is preferable to carry out dehydration and drying.

As for the methods of dehydration and drying, a thermal drying method is suitable for a powdery solid substance or the like, while a reduced pressure dehydration method or a dehydration method which uses a synthetic zeolite, active alumina or silica gel is suitable for a liquid substance. Additionally, there can be adopted a method in which a small amount of an isocyanate compound is blended and the isocyanate group thereof is made to react with water to dehydrate. In addition to these dehydration and drying methods, addition of the following compounds further improves the storage stability: lower alcohols such as methanol and ethanol; and alkoxysilane compounds such as n-propyltrimethoxysilane, vinyltrimethoxysilane, vinylmethyldimethoxysilane, γ-mercaptopropylmethyldimethoxysilane, γ-mercaptopropylmethyldiethoxysilane and γ-glycidoxypropyltrimethoxysilane.

It is particularly preferable that the used amount of a dehydrating agent, in particular, a silicon compound capable of reacting with water such as vinyltrimethoxysilane falls within a range from 0.1 to 20 parts by weight, and preferably 0.5 to 10 parts by weight in relation to 100 parts by weight of the reactive silicon group-containing polymer.

### Examples

Now, examples will be described below, but the present invention is not limited to these examples. It is to be noted that in the following Examples and Comparative Examples, the terms "parts" and "%" represent "parts by weight" and "wt%" respectively. Additionally, "triamine" means pentamethyldiethylenetriamine, and "number average molecular weights" and "molecular weight distributions (the ratios of a weight average molecular weight to a number average molecular weight)" were derived from the molecular weights obtained as relative to polystyrene standard by using gel permeation chromatography (GPC). It is to be noted that a column packed with a crosslinked polystyrene gel (shodex GPC K-804 manufactured by Showa Denko Co., Ltd.) was used as a GPC column, and chloroform was used as a GPC eluent. Additionally, in Examples and Comparative Examples, there were used Activ Glass manufactured by Pilkington plc which is a plate glass subjected to anti-staining treatment on the surface thereof.

### (Synthesis Example 1)

In a 250 L reactor equipped with a stirrer, CuBr (923.3 g, 6.44 mol) was placed, the inside of the reactor was charged with nitrogen and sealed, and then, acetonitrile (6671g) was added to the reactor and the mixture thus obtained was stirred at 65°C for 15 minutes. To the mixture, butyl acrylate (22.0 kg), diethyl 2,5-dibromoadipate (1931.2 g, 5.36 mol), acetonitrile (3000 g), triamine (44.8 mL, 214.6 mmol) were added, and the reaction was started. Butyl acrylate (88.0 kg) was continuously added dropwise to the reaction mixture while heating at 80°C under stirring. Triamine (179.2 mL, 859.5 mmol) was further added to the mixture in the course of the addition of butyl acrylate. Successively, the mixture was heated at 80°C under stirring, then 1,7-octadiene (15.847 kg), triamine (672.0 mL, 3.21 mol) were added to the mixture, and the mixture was further continued to heat at 80°C under stirring for 10 hours to yield a reaction mixture containing a polymer; moreover, the volatile content of the reaction mixture was distilled off under reduced pressure and an alkenyl-terminated polymer was thereby obtained.

In the 250 L reactor equipped with a stirrer, the obtained alkenyl-terminated polymer (100 kg), methylcyclohexane (100 kg) and adsorbents (2 kg for each; KYOWAAD 500SH and KYOWAAD 700SL manufactured by Kyowa Chemical Industry Co., Ltd.) were placed, and the reaction mixture was heated at 150°C for 2 hours under stirring in an atmosphere of an oxygen/nitrogen mixed gas; thereafter the solid content of the reaction mixture was separated to yield the polymer.

In a 10 L separable flask equipped with a reflux tube, the polymer (3.2 kg), potassium acetate (74.1 g) and N,N-dimethylacetic acid amide (3.2 L) were placed, and the reaction mixture was heated at 100°C for 8 hours under stirring in a flow of nitrogen gas. The N,N-dimethylacetic acid amide was removed by heating under reduced pressure, and then the reaction mixture was diluted with toluene. The solid content (KBr and excessive potassium acetate) insoluble in toluene was filtered off with an activated alumina column. The volatile content of the filtrate was distilled off under reduced pressure to yield a polymer.

In the 10 L separable flask equipped with a reflux tube, the polymer (3 kg), the adsorbents (1800 g; KYOWAAD 500SH and KYOWAAD 700SL manufactured by Kyowa Chemical Industry Co., Ltd.) and xylene (1.5 L) were placed, and the reaction mixture was heated at 130°C for 5.0 hours under stirring in a flow of nitrogen. The adsorbents were removed by filtration, and the filtrate was distilled off under reduced pressure to yield the polymer.

In a 2 L reaction vessel, the polymer (1300 g), dimethoxymethylhydrosilane (58.5 mL), methyl orthoformate (17.3 mL) and 1,1,3,3-tetramethyl-1,3-divinyldisiloxane complex of zero-valent platinum were placed. It is to be noted that the used amount of the platinum catalyst was 30 mg in terms of platinum in relation to 1 kg of the polymer. The reaction mixture was reacted under heating at 100°C for 3.5 hours, and then the volatile content of the mixture was distilled off under reduced pressure to yield a silyl-terminated vinyl based polymer (polymer P1). The number average molecular weight and the molecular weight distribution of the obtained polymer were 27000 and 1.4, respectively, according to the GPC measurement (relative to polystyrene standard). The average number of the silyl groups introduced into one molecule of the polymer was analyzed by means of the ¹H NMR analysis and was found to be 1.8.

### (Synthesis Example 2)

In a 250 L reactor equipped with a stirrer and a jacket, CuBr (1.11 kg) was placed and the inside of the reactor was purged with nitrogen. Acetonitrile (5.0 kg) was fed into the reactor, warm water was passed through the jacket, and the mixture was stirred at 70°C for 15 minutes. To this mixture, butyl acrylate (6.6 kg), ethyl acrylate (9.5 kg), methoxyethyl acrylate (7.8 kg) and a mixture of diethyl 2,5-dibromoadipate (3.09 kg) and acetonitrile (5.0 kg) were added, and the mixture thus obtained was stirred at 70°C further for about 30 minutes. To this mixture, triamine was added to start the reaction. In the course of the reaction, triamine was appropriately added, and polymerization was carried out at an internal temperature of the order of 70 to 80°C. The total amount of triamine used in the polymerization step was 45 g. After 4 hours from the start of the reaction, the unreacted monomers and the acetonitrile were devolatilized under reduced pressure by heating at 80°C under stirring. To the concentrated mixture thus obtained, acetonitrile (29.9 kg), 1,7-octadiene (28.4 kg) and triamine (446 g) were added, and the mixture was continuously stirred for 6 hours. By heating the mixture at 80°C under stirring and under reduced pressure, the acetonitrile and the unreacted 1,7-octadiene were devolatilized and the mixture was concentrated. To the concentrated mixture, toluene (120 kg) was added to dissolve the polymer. The solid copper in the polymer mixture was filtered off by use of a bagfilter (manufactured by Hayward Industrial Products, Inc., nominal filter cloth pore size: 1 µm). To the filtrate, KYOWAAD 500SH (manufactured by Kyowa Chemical Industry Co., Ltd., 2 parts by weight in relation to 100 parts by weight of the copolymer) and KYOWAAD 700SL (manufactured by Kyowa Chemical Industry Co., Ltd., 2 parts by weight in relation to 100 parts by weight of the copolymer) were added, and the mixture was heated at 120°C for 2 hours under stirring in an atmosphere of an oxygen/nitrogen mixed gas (oxygen concentration: 6%). The undissolved content in the mixture was filtered off. The filtrate was concentrated to yield a copolymer. The copolymer was heated for devolatilization at 180°C for 12 hours (at a reduced pressure of 10 torr or lower) to eliminate the Br groups from the copolymer.

To the copolymer, toluene (100 parts by weight in relation to 100 parts by weight of the copolymer), KYOWAAD 500SH (manufactured by Kyowa Chemical Industry Co., Ltd., 2 parts by weight in relation to 100 parts by weight of the copolymer), KYOWAAD 700SL (manufactured by Kyowa Chemical Industry Co., Ltd., 2 parts by weight in relation to 100 parts by weight of the polymer) and a hindered phenol based antioxidant (Irganox 1010, Ciba Specialty Chemicals K.K. 0.05 part) were added, and the mixture was heated at 130°C for 4 hours under stirring in an atmosphere of an oxygen/nitrogen mixed gas (oxygen concentration: 6%). The undissolved content in the mixture was filtered off. The filtrate was concentrated, and a copolymer was obtained as an alkenyl-terminated copolymer (alkenyl-terminated poly(butyl acrylate, ethyl acrylate, methoxyethyl acrylate)).

The number average molecular weight and the molecular weight distribution of the copolymer were found to be 18000 and 1.1, respectively. The average number of the alkenyl groups introduced into one molecule of the copolymer was analyzed by means of the ¹H NMR analysis and was found to be 1.9.

In a 140 L pressure resistant reactor equipped with a stirrer and a jacket, the copolymer (76 kg), dimethoxymethylhydrosilane (1.9 kg), methyl orthoformate (0.94 kg), and a xylene solution of 1,1,3,3-tetramethyl-1,3-divinyldisiloxane complex of zero-valent platinum (10 mg in terms of platinum in relation to 1 kg of the copolymer) were placed. The mixture was heated at 100°C under stirring for 2 hours in an atmosphere of nitrogen. The volatile content of the mixture was distilled off under reduced pressure to yield a silyl-terminated vinyl based copolymer (polymer P2). The number average molecular weight and the molecular weight distribution of the obtained copolymer were found to be 19000 and 1.2, respectively, according to the GPC measurement (relative to polystyrene standard). The average number of the silyl groups introduced into one molecule of the polymer was analyzed by means of the ¹H NMR analysis and was found to be 1.8.

### (Synthesis Example 3)

A polymer was obtained similarly to Example 2 by using CuBr (3.67g, 25.6 mmol), acetonitrile (46 mL), diethyl 2,5-dibromoadipate (9.59g, 26.6 mmol), butyl acrylate (382 g, 2.96 mol), methyl acrylate (39 g, 0.44 mol), triamine (2.58 mL, 12.78 mmol) and 1,7-octadiene (53 mL, 0.43 mol).

By use of the copolymer (350 g), dimethoxymethylhydrosilane (13.25 mL, 107.4 mmol), dimethyl orthoformate (3.92 mL, 35.8 mmol) and the platinum catalyst, a silyl-terminated poly(n-butyl acrylate/methyl acrylate) copolymer (polymer P3) was obtained. The number average molecular weight and the molecular weight distribution of the obtained copolymer were found to be about 20000 and to be 1.2, respectively. The average number of the silyl groups introduced into one molecule of the copolymer was analyzed by means of the ¹H NMR analysis and was found to be about 2.0.

### (Example 1)

With 100 parts of the polymer (P1) obtained in Synthesis Example 1, the following ingredients were blended: 150 parts of precipitated calcium carbonate ("Hakuenka CCR" manufactured by Shiraishi Kogyo Kaisha, Ltd., average particle size: 0.08 µm), 20 parts of ground calcium carbonate ("Nanox 25A" manufactured by Maruo Calcium Co., Ltd.), 10 parts of titanium dioxide ("Tipaque R-820" manufactured by Ishihara Sangyo Kaisha, Ltd.), 60 parts of diisodecyl phthalate (DIDP) as a plasticizer, 2 parts of an amide wax based antisagging agent ("Disparlon 6500" manufactured by Kusumoto Chemicals, Ltd.), 1 part of an antiaging agent ("Sanol LS-765" manufactured by Sankyo Co., Ltd.) and 1 part of an ultraviolet absorber ("TINUVIN 213" manufactured by Ciba Specialty Chemicals K.K.). The mixture thus obtained was fully mixed with a planetary mixer while devolatilizing with a vacuum pump. Thereafter, to the mixture, 2 parts of vinyltrimethoxysilane as a storage stability improver and 2 parts of γ-(2-aminoethyl)aminopropyltrimethoxysilane as an adhesion-imparting agent were further added. Then, a curing catalyst (dibutyltin diacetylacetonate) was added to the mixture, and the mixture was mixed under stirring while defoaming to prepare a sealant composition.

The sealant was adhered on a 50 mm long, 50 mm wide and 5.6 mm thick sheet of Activ Glass, namely, a plate glass subjected to anti-staining treatment, without using a primer, and by using a molding frame in such a way that the sealant formed a 40 mm long, 5 to 6 mm wide and 10 mm thick rectangular parallelepiped. Thereafter, the sealant was aged at 23°C for 4 days, and additionally at 50°C for 4 days, to yield a specimen. The specimen was irradiated with light through the glass surface on which no sealant was adhered, in a sunshine weather meter. It is to be noted that in the sunshine weather meter, the black panel temperature was 63°C, and the water spraying was conducted for 18 minutes every 120 minutes.

The weather resistant adhesiveness was evaluated by taking out the specimen from the sunshine weatherometer at regular time intervals. The evaluation method was such that an adhesion surface portion at a lengthwise end of the specimen was peeled with a blade, and the adhesion surface was manually peeled starting from the peeled portion to observe the break condition of the sealant. It is to be noted that the peeling in the interface in contact with the glass sheet is referred to as adhesion failure, and the break of the sealant itself is referred to as cohesion failure; excellent adhesiveness leads to cohesion failure. The results obtained are shown in Table 1.

### (Example 2)

A specimen was prepared in the same manner as in Example 1 except that the plasticizer was changed from 60 parts of DIDP to 80 parts of an acryl polymer based plasticizer ("UP 1020" manufactured by Toagosei Co., Ltd.); and the weather resistant adhesiveness of the specimen was evaluated. The results obtained are shown in Table 1. It can be seen that the use of the acryl polymer based plasticizer improves the weather resistant adhesiveness.

### (Example 3)

A specimen was prepared in the same manner as in Example 2 except that as a reactive silicon group-containing acryl based polymer, the polymer (P2) obtained in Synthesis Example 2 was used in place of the polymer (P1) obtained in Synthesis Example 1; and the weather resistant adhesiveness of the specimen was evaluated. The results obtained are shown in Table 1. It can be seen that the use of the acryl polymer based plasticizer improves the weather resistant adhesiveness.

### (Example 4)

A specimen was prepared in the same manner as in Example 1, by using, as a reactive silicon group-containing polymer sealant, a polyisobutylene sealant material "MILEX-Z" manufactured by Yokohama Rubber Co., Ltd. which is a reactive silicon group-containing saturated hydrocarbon sealant, and by using, as a primer, the No. 85 primer manufactured by the same company; and the weather resistant adhesiveness of the specimen was evaluated. The results obtained are shown in Table 1.

### (Example 5)

A specimen was prepared in the same manner as in Example 4, by using, as a reactive silicon group-containing saturated hydrocarbon sealant, a polyisobutylene sealant material "Penguin Seal 7000" manufactured by Sunstar Engineering Inc., and by using, as a primer, a silicone resin based primer "D-2" manufactured by Toray Dow Corning Co., Ltd.; and the weather resistant adhesiveness of the specimen was evaluated. The results obtained are shown in Table 1.

### (Comparative Example 1)

A specimen was prepared in the same manner as in Example 1, by using, as a reactive silicon group-containing polymer sealant, a reactive silicon group-containing oxyalkylene sealant "VG 30" manufactured by merz + benteli ag (Switzerland), but without using a primer; and the weather resistant adhesiveness of the specimen was evaluated. The results obtained are shown in Table 1.

### (Comparative Example 2)

A specimen was prepared in the same manner as in Comparative Example 1 except that an isocyanate based primer "MP-1000" manufactured by Cemedine Co., Ltd. was used as a primer; and the weather resistant adhesiveness of the specimen was evaluated. The results obtained are shown in Table 1.

**Table 1**

| Ex./ Comp. Ex. | Sealant type | Primer: Present/absent | Sunshine exposure time | | | | | |
|---|---|---|---|---|---|---|---|---|
| | | | 0 | 120 h | 240 h | 360 h | 480 h | 600 h |
| Ex. 1 | Acryl | Absent | CF | CF | CF | CF | CF | AF |
| Ex. 2 | Acryl | Absent | CF | CF | CF | CF | CF | CF |
| Ex. 3 | Acryl | Absent | CF | CF | CF | CF | CF | CF |
| Ex. 4 | Saturated hydrocarbon | Present | CF | CF | CF | CF | CF | CF |
| Ex. 5 | Saturated hydrocarbon | Present | CF | CF | CF | CF | CF | CF |
| Comp. Ex. 1 | Polyoxyalkylene | Absent, | CF | AF | AF | - | - | - |
| Comp. Ex. 2 | Polyoxyalkylene | present | CF | CF | CF | AF | - | - |
| CF: Cohesion failure; AF: Adhesion failure | | | | | | | | |

As clearly shown in Table 1, the sealants of the present invention, which are nonsilicone sealants, each are found to display an excellent weather resistant adhesiveness even when used for a transparent material subjected to anti-staining treatment.

### (Examples 6 to 10, and Comparative Example 3)

There were prepared Activ Glass specimens (Example 6 to 10) in which were adhered the sealants obtained in the same manners as in Examples 1 to 5. Additionally, there was prepared an Activ Glass specimen (Comparative Example 3) for which was adhered a sealant obtained in the same manner as in Example 1 by using a silicone sealant (one-component type "Sealant 45" which is a silicone sealant manufactured by Shin-Etsu Chemical Co., Ltd.). The sample specimens were allowed to stand outdoors for 3 months at Takasago City in Hyogo Prefecture in such a way that these sample specimens each were arranged to face the south with a tilt angle of 30° relative to the horizontal plane. The glass surface was misted with water droplets by using a spray, and the conditions of the water droplets were observed. The glass surface was made wet without forming water droplets in Examples 6 to 10, while water droplets were formed on the glass surface in Comparative Example 3. Probably, in the glass specimen of Example 3, the glass surface was stained by the silicone sealant so that the anti-staining effect of the glass surface was degraded to allow water droplet formation on the glass surface.

In the following Examples, Activ Glass manufactured by Pilkington plc, the same as used above, was used, and a xenon weatherometer was used as an accelerated weather resistance test apparatus; light was irradiated through the glass surface on which no sealant was adhered. It is to be noted that in the xenon weather meter, the black panel temperature was 63°C, the irradiation energy was 180 W/m², and the water spraying was conducted for 18 minutes every 120 minutes.

### (Example 11)

A specimen was prepared by applying the blended composition of Example 1 on the glass surface subjected to anti-staining treatment, and by using the same method as in Example 1; and the weather resistant adhesiveness of the specimen was evaluated. The results obtained are shown in Table 2.

### (Example 12)

A specimen was prepared by using a silicone resin primer "APZ-6633" (manufactured by Japan Unicar Co., Ltd.) and applying the blended composition of Example 1 on the glass surface subjected to anti-staining treatment, and by using the same method as in Example 1; and the weather resistant adhesiveness of the specimen was evaluated. The results obtained are shown in Table 2. The use of the silicone resin based primer APZ-6633 was able to further improve the weather resistant adhesiveness, as compared to Example 11.

### (Example 13)

A blended composition was prepared in the same manner as in Example 1 except that the content of the plasticizer DIDP in the blended composition of Example 1 was changed from 60 parts to 50 parts, and moreover, 10 parts of DMA (dimethyl adipate, manufactured by Daihachi Chemical Industry Co., Ltd.) was blended as a dimethyl carboxylate. By use of the obtained blended composition, a specimen was prepared by the same method as in Example 1; the weather resistant adhesiveness was evaluated. The results obtained are shown in Table 2. It can be seen that the use of dimethyl adipate improves the weather resistant adhesiveness.

### (Example 14)

A blended composition was prepared in the same manner as in Example 1 except that an acryl polymer based plasticizer ("UP 1020" manufactured by Toagosei Co., Ltd.) was used in place of 60 parts of the plasticizer DIDP in Example 1, and moreover, 10 parts of DMA (dimethyl adipate, manufactured by Daihachi Chemical Industry Co., Ltd.) was blended as a dimethyl carboxylate. The results obtained are shown in Table 2.

### (Example 15)

A blended composition was prepared in the same manner as in Example 1 except that the polymer (P3) was used in place of the polymer (P1), and the content of the plasticizer DIDP was changed to 80 parts. By use of the obtained blended composition, a specimen was prepared by the same method as in Example 1; and the weather resistant adhesiveness of the specimen was evaluated. The results obtained are shown in Table 2. It can be seen that the copolymerization of methyl acrylate was able to improve the weather resistant adhesiveness, as compared to Example 11.

**Table 2**

| Ex. | Sealant type | Primer: Present/ Absent | Evaluation results of weather resistant adhesiveness after xenon weatherometer test | | | |
|---|---|---|---|---|---|---|
| | | | 0 | 500 h | 1000 h | 2000 h |
| Ex. 11 | Acryl | Absent | CF | CF | CF | 20% AF |
| Ex. 12 | Acryl | Present | CF | CF | CF | CF |
| Ex. 13 | Acryl | Absent | CF | CF | CF | CF |
| Ex. 14 | Acryl | Absent | CF | CF | CF | CF |
| Ex. 15 | Acryl | Absent | CF | CF | CF | CF |
| CF: Cohesion failure; AF: Adhesion failure | | | | | | |

### Industrial Applicability

The sealant of the present invention is particularly useful as an elastic sealant, and can be used as sealants in buildings, ships, vehicles, roads and the like. In the application of a sealant, a primer can be used according to need, silicone based primers being preferable. Silicone based primers are particularly preferable for polyisobutylene sealants.

The method of the present invention can be suitably applied to nontransparent materials such as tiles provided with a photocatalytic anti-staining layer on the surface thereof. Mortar has hitherto been mainly used for adhering tiles; however, in these years organic based adhesives have come to be used for adhering tiles for the purpose of improving reliability of adhesion. The reactive silicon group-containing acryl based polymer or saturated hydrocarbon based polymer, used in the present invention, can be used to adhere tiles.

Usually, an adhesive is in contact with tiles, in particular, with the backsides of the tiles; however, sometimes, an adhesive on the side edge surface of tiles is in contact with the surface of tiles. Particularly in the case of a construction method referred to as tiling without joint filling in which joints are not filled with ornamental mortar and the adhesive is left also in the joints so as to be seen from the outside, the adhesive on the side edge surface of tiles is sometimes in contact with the surface of tiles. Additionally, in the case of a large area tiling, sometimes an elastic sealant is filled in some portions of the joints (in particular, vertical joints) for the purpose of absorbing the stress caused by the expansion and shrinkage of the tiles; also in this case, the adhesive on the side edge surface of tiles is sometimes in contact with the surface of tiles. Additionally, sometimes sealing is needed on the surface of tiles.

As described above, when cured adhesives or sealants are in contact with the surface of tiles, and titles are provided with a photocatalytic anti-staining layer, use of silicone adhesives and sealants may lead to a problem such that the surface of tiles is stained and the anti-staining action of the photocatalytic layer is inhibited. Additionally, when organic adhesives and sealants other than silicone ones are used, these adhesives and sealants are possibly decomposed and deteriorated by the anti-staining action of the photocatalytic layer.

In this connection, when the reactive silicon group-containing acryl or saturated hydrocarbon based polymers are used for the sealants and adhesives, no staining of the surface of tiles is caused and no decomposition and no deterioration of the sealants and adhesives are also caused.

## Claims

1. A sealant used in combination with a transparent material having an anti-staining layer on the surface thereof, in which the sealant comprises a reactive silicon group-containing acryl or saturated hydrocarbon based polymer.

2. The sealant according to claim 1, in which the anti-staining layer is a layer having the anti-staining action of a photocatalyst.

3. The sealant according to any one of claims 1 and 2, in which the transparent material is glass.

4. The sealant according to any one of claims 1 to 3, in which the transparent material is a building material.

5. The sealant according to any one of claims 1 to 4, in which the sealant comprises an acryl-based plasticizer as a component.

6. The sealant according to any one of claims 1 to 5, in which the sealant comprises a -COOCH₃ group-containing compound as a component.

7. The sealant according to any one of claims 1 to 6, in which the reactive silicon group-containing acryl or saturated hydrocarbon based polymer comprises a monomer unit deriving from a -COOCH₃ group-containing monomer.

8. A sealing method for sealing a transparent material having a layer comprising an anti-staining photocatalyst on the surface thereof, wherein a sealant comprising a reactive silicon group-containing acryl or saturated hydrocarbon based polymer is used.

9. The sealing method according to claim 8, in which the transparent material is glass.

10. The sealing method according to any one of claims 8 and 9, in which the transparent material is a building material.

11. The sealing method according to any one of claims 8 to 10, in which the layer having anti-staining photocatalysis on the surface thereof is a layer comprising a photocatalytic material as well as a hydrophilic material.

12. The sealing method according to any one of claims 8 to 11, in which the sealant comprises an acryl-based plasticizer as a component.

13. The sealing method according to any one of claims 8 to 12, in which the sealant comprises a -COOCH₃ group-containing compound as a component.

14. The sealing method according to any one of claims 8 to 13, in which the reactive silicon group-containing acryl or saturated hydrocarbon based polymer is a polymer comprising a monomer unit deriving from a -COOCH₃ group-containing monomer.

15. The sealing method according to any one of claims 8 to 14, in which a silicone based primer is applied onto a portion to be sealed of the transparent material.

16. A sealed transparent material, obtained according to the method according to any one of claims 8 to 15.
